# EUROPEAN PATENT SPECIFICATION

(11) **EP 1 448 434 B1**
(45) Date of publication and mention of the grant of the patent: **22.06.2005**
(21) Application number: 02780187.7
(22) Date of filing: 21.11.2002
(51) Int. Cl.: B63B 39/06

(54) **APPARATUS FOR DIRECTING A WATER FLOW AND VESSEL PROVIDED THEREWITH**
VORRICHTUNG ZUM LEITEN EINES WASSERSTRAHLS UND DAMIT AUSGERÜSTETES WASSERFAHRZEUG
APPAREIL PERMETTANT DE DIRIGER UN FLUX D'EAU

(30) Priority: 21.11.2001 NL 1019407
(43) Date of publication of application: 25.08.2004
(73) Proprietor: De Lange, Adrianus Huig Johannes, 1749 BN Warmenhuizen (NL)
(72) Inventor: De Lange, Adrianus Huig Johannes, 1749 BN Warmenhuizen (NL)
(74) Representative: Kupecz, Arpad
(86) International application number: PCT/NL2002/000756
(87) International publication number: WO 2003/043879

(56) References cited:
- GB-A- 331 949
- US-A- 3 757 723
- US-A- 4 487 152
- US-A- 4 915 048
- PATENT ABSTRACTS OF JAPAN vol. 1996, no. 06, 28 June 1996 (1996-06-28) & JP 08 048288 A (SUMITOMO HEAVY IND LTD), 20 February 1996 (1996-02-20)

## Description

The present invention relates to a vessel with an apparatus for directing a water flow, according to the preamble of claim 1.

In general the invention relates to the problem that at a so-called hull speed and higher speeds, vessels slant backward. This is caused, among other things, by hydrodynamic forces under the forward part of the ship and by the reduction of bearing capacity at the stern. This effect occurs in particular with ships that have a U-shaped midship section with V-shaped fore- and afterbody, but ships with a semicircular body or a V-shaped body also exhibit this problem.

In US-A-4,487,152 a stabilizer is known, which is arranged on an outboard motor of a ship and which is shaped as the apparatus as indicated in the preamble of claim 1. Said stabilizer is used for overcoming the problem that the ship slants backward when sailing. However, it has shown that a further improvement is still necessary.

As a matter of fact, the use of so-called trim tabs at the ships' stern is already known in the art. Such trim tabs are fastened to the hull of the ship below the surface of the water. Said trim tabs are designed as flat plates. Due to their simplicity, the angle at which these trim tabs are fastened can usually be adjusted as desired. The angle of the trim tab in relation to the ship's hull can be adjusted subject to the speed of the vessel.

It is an object of the invention to provide an improved vessel of the kind mentioned in the preamble, that does not exhibit the above-mentioned drawbacks.

More particularly, it is the object of the invention to provide an improved vessel with an apparatus of this kind that can be fastened at a permanent position in relation to the ship's hull and that does not require an adjustment of the angle.

In order to achieve at least one of the aforementioned objectives, the invention provides a vessel in accordance with the independent claim 1. In this way the interaction between the forces that are brought to bear upon the apparatus by the approaching flow of water is such that when the slant of the ship's hull is increased, the buoyant force is increased. As a consequence, the ship's hull is pushed upward at the position of the apparatus (i.e. the stern). The design of this adaptation is chosen such that the vessel assumes an angle position in which a desirable longitudinal trim of the vessel can be guaranteed, irrespective of its speed.

Further preferred embodiments of the invention are described in the claims 2-7.

A vessel in accordance with the present invention has the advantage that it has a constant longitudinal trim irrespective of the speed of the vessel.

It has been shown that it is especially advantageous for the upper main surface of the apparatus to be formed substantially convex and the lower main surface of the apparatus substantially concave. At the upper side, the water flowing along the apparatus produces an underpressure and at the underside an overpressure, resulting in a vertical lift. The more the apparatus tends to come to the water surface, or if the position of the vessel is more horizontal, the hydrodynamic under-pressure at the upper side of the apparatus will decrease. On the other hand, if the vessel slants backwards, the underpressure at the upper side of the apparatus will become greater, as will the overpressure at the underside of the apparatus. This will increase the vertical lift and will lift the apparatus toward the surface of the water.

As the ship's hull slants backward due to the hydrodynamic forces under the forward part of the ship, the angle of the approaching flow of water to the hull and to the apparatus will also alter. In this position the approaching flow of water to the apparatus will be largely at the underside. Due to the concave form of the apparatus at the underside, the front rim of the apparatus will be directed slightly downward in the direction of the approaching flow of water resulting, among other things, in a laminar approaching flow of water along the profile.

The fact that the rear side of the apparatus is directed downward when the ship is slanting backward, and the profile of the apparatus is concave at the underside and convex at the upper side, the approaching flow of water produces a strongly upward directed force to the apparatus (i.e. a force directed away from the convex surface). The combination of a concave surface and a convex surface has been shown to very effectively straighten the ship in numerous different positions, i.e. when it is slanting backward in a greater of lesser degree. Surprisingly, this renders it unnecessary to mount the apparatus to the ship so as to be adjustable.

A very surprising effect is that along the ship's hull at the stern the wave system is much smoother. This may strongly reduce the wash (the divergent waves formed at the stern) that is usually formed. This also applies to the transverse waves. There is no simple explanation for this unexpected outcome. The result is a reduction of the wave resistance, which may have a positive effect on the fuel consumption or, alternatively, may cause a speed increase at a constant fuel consumption compared with a vessel not provided with the apparatus according to the invention.

The apparatus which is part of the vessel according to the invention is particularly suitable to be used with vessels having a V-shaped afterbody. However, the apparatus may also be used with vessels having a less sharp stern.

The apparatus which is part of the vessel according to the invention may be manufactured from various materials. For example, it may be manufactured from a plastic, optionally reinforced, that may be solid or hollow. The apparatus may also be manufactured from other materials, such as metal. The apparatus may also be manufactured from natural materials such as wood.

As will be shown in the figures, the apparatus which is part of the vessel according to the invention may consist of two separate pieces mounted at the stern to the port side and the starboard side of a vessel, or may form a part thereof. The apparatus may also be manufactured in one or several pieces, for example two pieces, in which case the same is mounted around the stern or at the sides of the stern, respectively.

The transition from the apparatus to the hull is preferably rounded off and may be formed as flange, serving at the same time as glueing surface.

The apparatus may be manufactured by moulding. However, machining is also a possibility for manufacturing the apparatus according to the invention.

Hereafter the invention will be elucidated with reference to a drawing.
Fig. 1 shows a perspective view of a double ended vessel with the apparatus according to the invention.
Fig. 2 show a longitudinal view of the double ended vessel according to Fig. 1.
Fig. 3 shows a cross section of the apparatus which is part of the vessel according to the invention.
Fig. 4 show a cross section of a further embodiment of the apparatus which is part of the vessel according to the invention.
Fig. 5 shows a cross section of still another embodiment of the apparatus.
Fig. 6 shows a cross section of a further embodiment of the apparatus which is part of the vessel according to the invention.

Hereafter the apparatus will be indicated with the term "wing". This term must not be interpreted as a limitation.

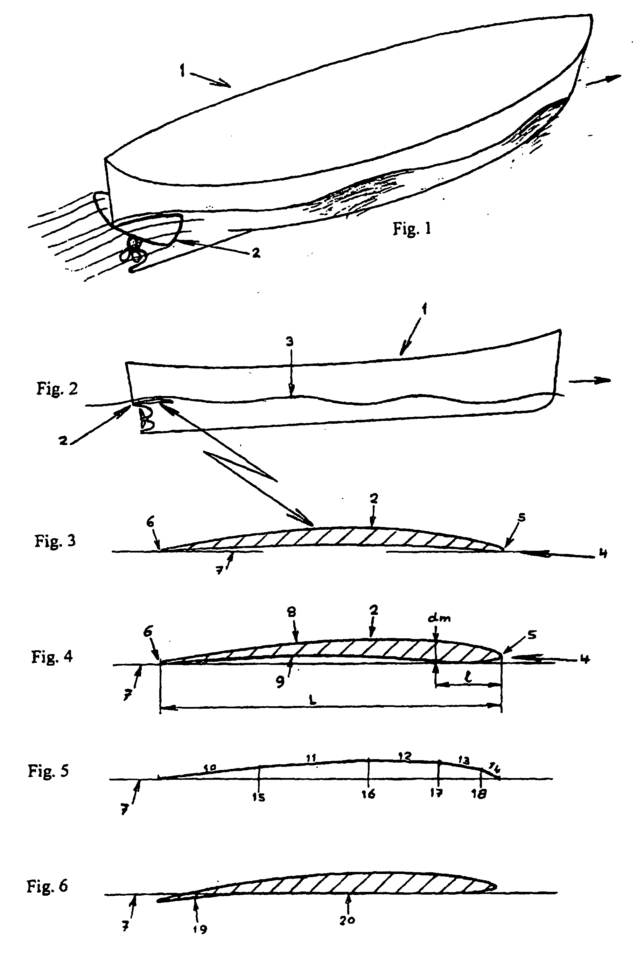

Fig. 1 shows a vessel 1 which is provided with a wing 2. The wing 2 is mounted to the stern of the vessel. As can be clearly seen in Fig. 2, the wing is positioned at a position under the surface of the water 3.

Fig. 3 shows a cross section of the profile of the wing 2 according to a first embodiment. The direction of approaching flow of water to the wing is indicated with an arrow 4. In this embodiment, the flow approach side of the profile 2, the front 5, is rather sharp. The rear side 6 of the profile is also sharp. Fig. 3 also shows, a base line 7 indicating the plane under the front side 5 and the rear side 6. When the apparatus 2 is mounted on a vessel 1, as shown in Fig. 3, the direction of the approaching flow of water to the wing 2 is slightly from below. In practice this means that when the vessel is in a normal position in the water, both the rear side 6 of the wing 2 and the front side 5 of the wing 2 are oriented downward. Also, the rear side 6 is positioned lower than the front side 5.

Fig. 4 shows a particular embodiment of a cross section of a wing according to the invention. The upper side 8 of the wing 2 is convex and the underside 9 is substantially concave. This creates a cavity between the baseline 7 and the underside 9 of the wing. At a distance "1" from the front side 5 of the wing 2, which has a total length "L", the concave surface of the underside of the wing changes to a convex surface. As shown, this distance 1 is the distance from the front side 5 of the wing 2 where the thickness d of the profile is maximal, dₘ. The rear side 6 of the apparatus 2 is sharp.

According to a first preference, 1 lies in the range from 0.01·L to 0.50·L, more preferably from 0.05·L to 0.4·L, still more preferably from 0.1·L to 0.3·L, with L relating to the aforementioned total length.

The rear side 6 of the wing 2 does substantially not need to be much rounded off, for example, it may be more or less sharp.

A simple embodiment of the apparatus according to the invention is shown in Fig. 5, in which the same is composed of five segments 10, 11, 12, 13, 14. Each segment 10, 11, 12, 13, 14 is comprised of substantially one flat plate. In the embodiment shown, the segments 10, 11, 12, 13, 14 have unequal dimensions. However, it is also possible for each of the segments 10, 11, 12, 13, 14 to be embodied with the same form and dimensions. The angle at which the segments 10, 11, 12, 13, 14 are fastened to one another is optional, for example, so as to obtain a form that corresponds to some extent with the form of the wing according to Fig. 3 or Fig. 4.'The segments may be removably or permanently connected to one another, and may or may not be adjustable. This also applies for the variant shown in Fig. 6. Fig. 6 shows a wing 20, which at its underside largely follows the baseline 7, but is provided with a segment 19 extending downward so as to form the concave lower surface.

It will be obvious that the invention is not limited to the embodiment shown in the drawing and extensively discussed in the description. In essence the invention is limited by the appended claims only.

## Claims

1. A vessel with an apparatus for directing a water flow, wherein said apparatus has a substantially convex upper main surface and a substantially concave lower main surface and is fastened below the water surface, **characterized in that** said apparatus is fastened directly to the stern of the vessel.

2. A vessel with an apparatus according to claim 1, **characterised in that** at a position near the front of the apparatus the concave surface changes to a convex surface.

3. A vessel with an apparatus according to claim 1 or 2, **characterised in that** the rim at the front of the apparatus is directed downward in relation to the water surface/water plane.

4. A vessel with an apparatus according to one or several of the preceding claims, **characterised in that** the rear of the apparatus is directed downward in relation to the water plane.

5. A vessel with an apparatus according to one or several of the preceding claims, **characterised in that** the same is comprised of segments joined in succession and placed at an angle to each other so as to form the concave lower main surface and the convex upper main surface.

6. A vessel with an apparatus according to one or several of the preceding claims, **characterised in that** at the front there is a smooth transition between the concave and convex main surfaces.

7. A vessel with an apparatus according to one or several of the preceding claims, **characterised in that** the apparatus has a total length L and over the length L a varying thickness d,
with a thickness of the apparatus being maximal, dₘ, at a distance 1 from the front of the apparatus,
with 1 ranging from 0.01·L to 0.50·L, more preferably from 0.05·L to 0.90·L, still more preferably from 0.10·L to 0.30·L.

## Patentansprüche

1. Wasserfahrzeug mit einer Vorrichtung zum Leiten eines Wasserstrahls, wobei die Vorrichtung eine im wesentlichen konvexe obere Hauptoberfläche und eine im wesentlichen konkave untere Hauptoberfläche aufweist und unterhalb der Wasseroberfläche befestigt ist,
**dadurch gekennzeichnet, dass**
die Vorrichtung direkt am Heck des Wasserfahrzeuges befestigt ist.

2. Wasserfahrzeug mit einer Vorrichtung nach Anspruch 1,
**dadurch gekennzeichnet, dass**
an einer Position benachbart dem vorderen Abschnitt der Vorrichtung die konkave Oberfläche sich in eine konvexe Oberfläche wandelt.

3. Wasserfahrzeug mit einer Vorrichtung nach Anspruch 1 oder 2,
**dadurch gekennzeichnet, dass**
der Rand am vorderen Abschnitt der Vorrichtung bezüglich der Wasseroberfläche/Wasserebene nach unten gerichtet ist.

4. Wasserfahrzeug mit einer Vorrichtung nach einem oder mehreren der vorhergehenden Ansprüche,
**dadurch gekennzeichnet, dass**
der hintere Abschnitt der Vorrichtung bezüglich der Wasserebene nach unten gerichtet ist.

5. Wasserfahrzeug mit einer Vorrichtung nach einem oder mehreren der vorhergehenden Ansprüche,
**dadurch gekennzeichnet, dass**
dieselbe Segmente umfasst, die hintereinander aneinandergefügt sind und zueinander derart mit einem Winkel angeordnet sind, dass die konkave untere Hauptoberfläche und die konvexe obere Hauptoberfläche gebildet werden.

6. Wasserfahrzeug mit einer Vorrichtung nach einem oder mehreren der vorhergehenden Ansprüche,
**dadurch gekennzeichnet, dass**
am vorderen Abschnitt ein allmählicher Übergang zwischen den konkaven und der konvexen Hauptoberflächen entsteht.

7. Wasserfahrzeug mit einer Vorrichtung nach einem oder mehreren der vorhergehenden Ansprüche,
**dadurch gekennzeichnet, dass**
die Vorrichtung eine gesamte Länge L und entlang der Länge L eine variierende Dicke d aufweist,
mit einer Dicke der Vorrichtung die maximal, dₘ, bei einem Abstand 1 vom vorderen Abschnitt der Vorrichtung ist,
mit 1, das im Bereich von 0,01 x L bis 0,50 x L liegt, vorzugsweise von 0,05 x L bis 0,40 x L, und insbesondere vorzugsweise von 0,10 x L bis 0,30 x L.

## Revendications

1. Navire muni d'un appareil permettant d'orienter un écoulement d'eau, dans lequel ledit appareil a une surface principale supérieure sensiblement convexe et une surface principale inférieure sensiblement concave et est fixé en dessous de la surface de l'eau, **caractérisé en ce que** ledit appareil est directement fixé à la poupe du navire.

2. Navire muni d'un appareil selon la revendication 1, **caractérisé en ce qu'**en une position située à proximité de l'avant de l'appareil, la surface concave se change en une surface convexe.

3. Navire muni d'un appareil selon la revendication 1 ou 2, **caractérisé en ce que** le rebord disposé à l'avant de l'appareil est orienté vers le bas par rapport à la surface de l'eau ou au plan d'eau.

4. Navire muni d'un appareil selon une ou plusieurs des revendications précédentes, **caractérisé en ce que** l'arrière de l'appareil est orienté vers le bas par rapport au plan d'eau.

5. Navire muni d'un appareil selon une ou plusieurs des revendications précédentes, **caractérisé en ce que** celui-ci est composé de segments joints successivement les uns aux autres et faisant les uns par rapport aux autres un angle permettant de former la surface principale inférieure concave et la surface principale supérieure convexe.

6. Navire muni d'un appareil selon une ou plusieurs des revendications précédentes, **caractérisé en ce qu'**il existe à l'avant de celui-ci une transition progressive entre les surfaces principales concave et convexe.

7. Navire muni d'un appareil selon une ou plusieurs des revendications précédentes, **caractérisé en ce que** l'appareil a une longueur totale L et une épaisseur variable d qui varie en suivant la longueur L,
l'épaisseur de l'appareil ayant une valeur maximum dₘ à une distance 1 de l'avant de l'appareil,
la distance 1 allant de 0,01 L à 0,50 L, de manière plus préférée de 0,05 L à 0,40 L, de manière encore plus préférée de 0,10 L à 0,30 L.
